# EUROPEAN PATENT SPECIFICATION

(11) **EP 0 737 826 B1**
(45) Date of publication and mention of the grant of the patent: **11.11.1998**
(21) Application number: 96105616.5
(22) Date of filing: 10.04.1996
(51) Int. Cl.: F16H 61/36, G05G 5/06

(54) **A gear shift assembly including a device for correct positioning thereof**
Gangschalthebel mit federnder Vorrichtung zum Positionieren
Levier de changement de vitesse avec dispositif élastique pour le positionnement

(30) Priority: 14.04.1995 IT TO950092 U
(43) Date of publication of application: 16.10.1996
(73) Proprietor: FIAT AUTO S.p.A., 10135 Torino (IT)
(72) Inventor: Valter, Maggiora, 10144 Torino, TO (IT)
(74) Representative: Di Francesco, Gianni

(56) References cited:
- US-A- 4 458 549
- US-A- 4 726 249
- US-A- 4 879 922

## Description

The present invention refers to a gear shift lever assembly and a device for positioning it correctly. More particularly, the invention relates to a gear shift lever assembly connected to flexible cables and moving in two perpendicular planes.

With known kinds of flexible cable gearshifts a device is required to help keeping the gear shift lever in a central position (neutral position), or in a rotated position (in gear engagement) in particular as concerns engaging gear movements, as shown in US-A-4 458 549.

It is an object of the present invention to provide a simple and cost-effective device for keeping the gear shift lever in the required position. It is desired to propose such a device which is reliable and easy to mount.

The above and further objects which will be more apparent hereinafter are attained according to the present invention by the provision of a gear shift lever assembly as claimed in claim 1.

For a better understanding of the present invention, reference is made to the following detailed description of an exemplary embodiment considered in combination with the accompanying drawings, in which:

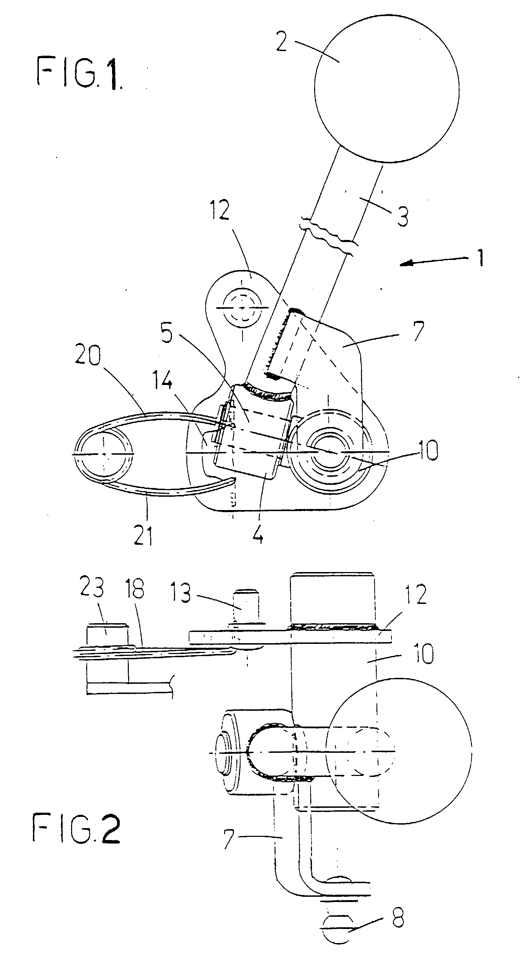

- FIG. 1: is a side view of a gear shift lever assembly fitted with the device of this invention;
- FIG. 2: is a top view of the gear shift lever assembly of FIG. 1;

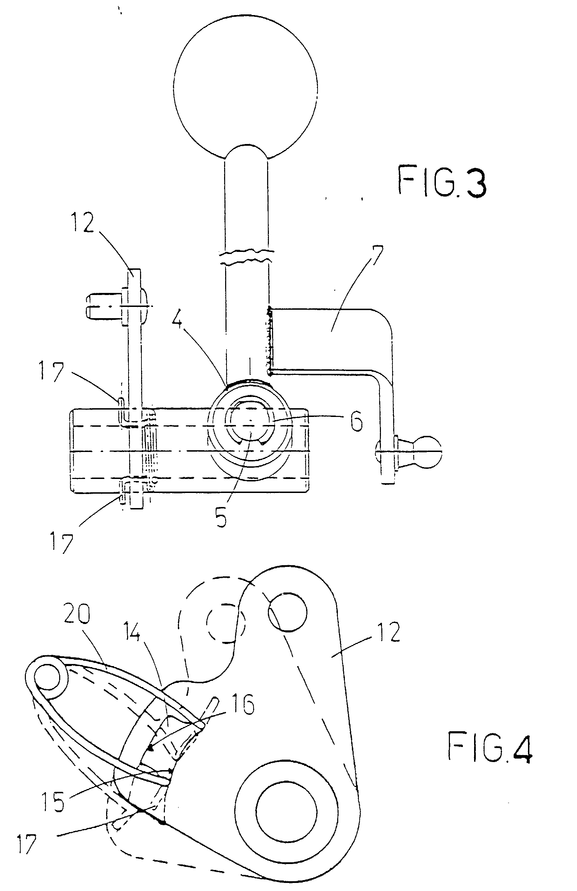

- FIG. 3: is a front view of the gear shift lever assembly of FIG. 1; and
- FIG. 4: is a view of a detail of FIG. 1 to an enlarged scale.

With reference to the drawings, numeral 1 designates a gear shift lever assembly. A gear shift lever 3 is fitted with a knob 2.

The end of lever 3 opposite to that with knob 2 provides a cylindrical bushing support 4 for a pin 5 on which the bushing is inserted and about which it is free to rotate. A retaining ring 6 prevents the bushing 4 from coming off pin 5.

Lever 3 further bears a curved bracket 7 the free end of which is fitted with a head 8 providing connection to a flexible cable for driving the gear selecting shaft in response to movement of the gear shift lever in a first plane perpendicular to the axis of pin 5.

Pin 5 is integral with and perpendicular to a second hollow cylindrical support 10 adapted to rotate about its axis on a second pin (not shown) fixed to the vehicle structure.

In this way, lever 3 can move in a plane which contains the axis of pin 5 and is perpendicular to said first plane.

Associated to cylindrical support 10 and integral therewith is a flat bracket 12 having a nib 13 for connecting to a flexible cable (not shown) for gear engagement.

Flat bracket 12 provides a seat 14 having substantially the shape of an isosceles trapezium with the larger base 15 nearer to the cylindrical support 10 and the minor base 16 facing the other way. The corners of seat 14 are so shaped as to receive the ends 17 of a safety-pin spring 18 which are hooked therein. Spring 18 forms arms 20, 21 of equal length and curvature. Spring 18 is free to rotate about a pin 23 which acts as a pivot and is fixed to the vehicle structure.

Operation of the assembly according to the present invention is described hereinafter, referring particularly to FIG. 4.

As can be easily understood, when lever 3 is in its neutral, central position, spring 18 having its ends engaged within the shaped corners of the greater base 15 of said trapezium seat will resist rotation of second cylindrical support 10. Therefore, spring 18 will tend to keep bracket 7, which is connected to said support 10 and so to lever 3, in the central position corresponding to non-engagement of gears.

When a gear is engaged through lever 3, bracket 7 reaches a rotated position (shown in dashed line in FIG. 4) and one of the two spring arms 20, 21 (in this example arm 21) passes from the corner of greater base 15 of trapezium seat 14 to the corresponding corner of minor base 16 and enters the shaped corner.

In this way, also the gear engaged position is maintained by the bias of spring 18.

The sides of the trapezium will obviously be shaped as to not prevent the ends 17 of the spring from sliding thereon.

## Claims

1. A gear shift lever assembly including a device to position it correctly, in particular a gear shift lever assembly connected to flexible cables and moving in two perpendicular planes, comprising a first support (4) and a second support (10) arranged to rotate about two perpendicular axes, whereby the second support (10) provides a bracket (12) the position of which is controlled by a safety-pin spring (18) acting between a pin fixed to a vehicle structure and said second support (10),
**characterised in that**
- the safety-pin spring (18) is free to rotate about a pivoting pin (23) fixed to said vehicle structure, and
- the ends (17) of the safety-pin spring (18) are inserted in a seat (14)
-- obtained in said bracket (12) of said second support (10) and
-- having a substantially isosceles trapezium shape.

2. A gear shift lever assembly as claimed in claim 1, 2, characterised in that the safety-pin spring (18) has two arms (20, 21) of equal length.

3. A gear shift lever assembly as claimed in claim 1, characterised in that the trapezium seat (14) has its greater base facing said support (10).

4. A gear shift lever assembly as claimed in claim 1, characterised in that said seat (14) has corners so shaped as to receive the ends (17) of said spring (18).

## Patentansprüche

1. Gangschalthebelanordnung mit einer Vorrichtung zu deren korrekter Positionierung, insbesondere einer Gangschalthebelanordnung, die mit flexiblen Kabeln verbunden und sich in zwei senkrechten Ebenen bewegt, bestehend aus einem ersten Halter (4) und einem zweiten Halter (10), die um zwei senkrechte Achsen drehbar sind, wobei der zweite Halter (10) einen Arm (12) hat, dessen Position von einer Feder (18) in Form einer Sicherheitsnadel gesteuert wird, die zwischen einem an einem Fahrzeugrahmen befestigten Stift und dem zweiten Halter (10) wirkt,
**dadurch gekennzeichnet, daß**
- die Sicherheitsnadel-Feder (18) um einen Schwenkzapfen (23), der am Fahrzeugrahmen befestigt ist, frei drehen kann, und
- die Enden (17) der Sicherheitsnadel-Feder (18) in einen Sitz (14) eingesetzt sind,
- der Sich im Arm (12) des zweiten Halters (10) befindet und
- im wesentlichen die Form eines gleichschenkligen Trapezes hat.

2. Gangschalthebelanordnung nach Anspruch 1,
**dadurch gekennzeichnet, daß**
die Sicherheitsnadel-Feder (18) zwei Arme (20, 21) gleicher Länge hat.

3. Gangschalthebelanordnung nach Anspruch 1,
**dadurch gekennzeichnet, daß**
die größere Basis des Trapezsitzes (14) zum Halter (10) weist.

4. Gangschalthebelanordnung nach Anspruch 1,
**dadurch gekennzeichnet, daß**
die Ecken des Sitzes (14) so geformt sind, doß sie die Enden (17) der Feder (18) aufnehmen.

## Revendications

1. Ensemble de levier de changement de vitesse, incluant un dispositif pour le positionner convenablement, en particulier un ensemble de levier de changement de vitesse relié à des câbles flexibles et se déplaçant selon deux plans perpendiculaires, comprenant un premier support (4) et un second support (10) disposés pour tourner autour de deux axes perpendiculaires, de sorte que le second support (10) constitue une patte (12) dont la position est commandée par un ressort à goupille de sécurité (18) agissant entre une broche fixée à une structure d'automobile et le dit second support (10),
caractérisé en ce que
- le ressort à goupille de sécurité (18) est libre de tourner autour d'une broche pivotante (23) fixée à la dite structure d'automobile, et
- les extrémités (17) du ressort à goupille de sécurité (18) sont insérées dans un siège (14)
-- obtenu dans la dite patte (12) du dit second support (10) et
-- ayant une forme de trapèze sensiblement isocèle.

2. Ensemble de levier de changement de vitesse selon la revendication 1, caractérisé en ce que le ressort à goupille de sécurité (18) a deux bras (20, 21) d'égales longueurs.

3. Ensemble de levier de changement de vitesse selon la revendication 1, caractérisé en ce que le siège trapézoïdal (14) a sa base la plus longue tournée vers le dit support (10).

4. Ensemble de levier de changement de vitesse selon la revendication 1, caractérisé en ce que le dit siège (14) a des coins ayant une forme lui permettant de recevoir les extrémités (17) du dit ressort (18).
